# EUROPEAN PATENT SPECIFICATION

(11) **EP 2 091 703 B1**
(45) Date of publication and mention of the grant of the patent: **21.03.2018**
(21) Application number: 07852245.5
(22) Date of filing: 11.12.2007
(51) Int. Cl.: B27B 21/00, B27B 33/10, B23D 61/12

(54) **SAW, HANDLE AND BLADE**
SÄGE, GRIFF UND SCHNEIDE
SCIE, POIGNÉE ET LAME

(30) Priority: 11.12.2006 SE 0602684; 12.12.2006 US 874258 P
(43) Date of publication of application: 26.08.2009
(73) Proprietor: Kapman AB, 811 81 Sandviken (SE)
(72) Inventor: JANSSON, Conny, S-723 48 Västerås (SE); ANDRÉN, Mårten, S-163 46 Spånga (SE); HIMBERT, Hans, S-112 52 Stockholm (SE)
(74) Representative: Groth & Co. KB
(86) International application number: PCT/SE2007/050973
(87) International publication number: WO 2008/082348

(56) References cited:
- EP-A2- 1 053 813
- DE-U1-202005 008 995
- DE-U1-202005 008 995
- US-A- 601 480
- US-A- 601 480
- US-A- 1 362 676
- US-A- 1 405 925
- US-A- 2 140 496
- US-A1- 2002 029 484

## Description

The present invention relates to a saw according to the preamble of claim 1 and comprising at least one handle and at least one blade, the handle having at least one fastening device having at least one first part in the form of a rotational body, which rotational body can be turned around a first turning axis, the blade being detachable from the handle and having at least one through cut out extending from an edge of the blade. The present invention also relates to a handle according to the preamble of claim 6 for use in a saw and a blade according to the preamble of claim 11 for use in a saw.

### Prior Art

Such a saw according to the preamble of claim 1 and such a handle according to the preamble of claim 6 are known from US2140496A1.

US, A, 1 405 925 shows a saw handle having a detachable blade. The combination allows the use of a number of blades for the same handle, including blades of different types for different kinds of work. However, blades of different thickness cannot be used and the stability upon sawing is not at optimum.

DE 20 2005 008 995, U1 also discloses a saw handle according to the preamble of claim 11 and having a detachable blade. This saw handle discloses a spring locking lever mechanism for releasing the detachable blade.

### Summary of the Invention

A first object of the present invention is to provide a saw that, in spite of the blade being detachable, holds the blade more firmly and is more stable upon sawing than hitherto known saws of the corresponding type. A second object of the present invention is to provide a handle for use in such a saw. A third object of the present invention is to provide a blade for use in such a saw.

A fourth object of the present invention is to provide a saw that, by the blade being detachable, allows the fitting of blades of different thicknesses. A fifth object of the present invention is to provide a handle for use in such a saw. A sixth object of the present invention is to provide a blade for use in such a saw.

A seventh object of the present invention is to provide a saw that, by the blade being detachable, allows the fitting of blades upside down in the handle. An eighth object of the present invention is to provide a handle for use in such a saw. A ninth object of the present invention is to provide a blade for use in such a saw.

A tenth object of the present invention is to provide a saw that, by the handle being ergonomically and/or asymmetrically shaped and the blade being detachable, allows sawing with highest comfort and/or with best control and/or with best sawing performance using different types of blades. An eleventh object of the present invention is to provide a handle for use in such a saw. A twelfth object of the present invention is to provide a blade for use in such a saw.

Thus, the invention embraces a saw as defined by the features of claim 1.

The invention also embraces a handle as defined by the features of claim 6.

The invention also embraces a blade as defined by the features of claim 11.

Further preferred embodiments are defined by the features of dependent claims 2-5, 7-10 and 12-18.

### List of Figures

Figure 1 shows, in perspective view, a part of a handle and a part of a blade according to the invention before fitting of the blade in the handle.
Figure 2 shows, in perspective view, the handle and the blade according to Figure 1 when the fitting of the blade has been commenced, the blade being in contact with a shaft.
Figure 3 shows, in perspective view, the handle and the blade according to Figure 1 when the fitting of the blade has proceeded, the blade being in contact with a shaft as well as a rotational body.
Figure 4 shows, in perspective view, the handle and the blade according to Figure 1 when the fitting of the blade has proceeded further, the rotational body having been turned a first distance.
Figure 5 shows, in perspective view, the handle and the blade according to Figure 1 when the fitting of the blade has proceeded further, the rotational body having been turned a second distance.
Figure 6 shows, in perspective view, the handle and the blade according to Figure 1 when the fitting of the blade has proceeded further, the rotational body having been turned a third distance.
Figure 7 shows, in perspective view, the handle and the blade according to Figure 1 when the fitting of the blade has proceeded further, the rotational body having been turned a fourth distance.
Figure 8 shows, in perspective view, the handle and the blade according to Figure 1 when the fitting of the blade has proceeded further, the rotational body having been turned a fifth distance.
Figure 9 shows, in perspective view, the handle and the blade according to Figure 1 when the fitting of the blade has proceeded further, the rotational body having been turned a sixth distance and the blade being maximally inserted into the handle.
Figure 10 shows, in perspective view, the handle and the blade according to Figure 1 when disassembly of the blade has been commenced, the rotational body having been turned back a distance corresponding to the position in Figure 7.
Figure 11 shows, in perspective view, the handle and the blade according to Figure 1 when the blade is fitted upside down in the handle.
Figure 12 shows, in perspective view, a detail of the handle and the blade according to Figure 1 when the blade is maximally inserted into the handle.
Figure 13 shows, in side view, an alternative embodiment of a handle and a part of a blade according to the invention, the blade being maximally inserted into the handle.
Figure 14 shows, in side view, the handle and the blade according to Figure 13, the rotational body having been turned back a distance corresponding to the position in Figure 7.
Figure 15 shows, in side view, the handle and the blade according to Figure 13, wherein the rotational body has been turned back maximally and the blade can be removed.
Figure 16a shows, in perspective view, an insert for a fastening device fitted on a handle according to the invention.
Figure 16b shows, in perspective view, the insert according to Figure 16a as seen from another angle.
Figure 17a shows, in perspective view, a first part of a rotational body according to the invention.
Figure 17b shows, in perspective view, the first part according to Figure 17a as seen from another angle.
Figure 18a shows, in perspective view, an alternative embodiment of a first part of a rotational body according to the invention.
Figure 18b shows, in perspective view, the first part according to Figure 18a as seen from another angle.
Figure 19a shows, in perspective view, a second part of a rotational body according to the invention.
Figure 19b shows, in perspective view, the second part according to Figure 19a as seen from another angle.
Figure 20 shows, in perspective view, a part of an actuation device, the first part of the rotational body according to Figure 18a, a first shaft and the second part of the rotational body according to Figure 19a according to the invention, the parts of the rotational body being shown schematically.
Figure 21 shows, in perspective view obliquely from above, an alternative embodiment of a handle and a part of a blade according to the invention, the blade being fitted in the handle.
Figure 22 shows, in perspective view obliquely from behind, the handle and the part of the blade according to Figure 21.
Figure 23 shows, in perspective view obliquely from below, the handle and the part of the blade according to Figure 21 when the handle is held by a user.
Figure 24 shows, in side view, the handle and the part of the blade according to Figure 21 when the handle is held by a user who holds the key partly raised.
Figure 25 shows, in perspective view from the left and in exploded view, an additional alternative embodiment of a handle and a part of a blade according to the invention and in closed position.
Figure 26 shows, in perspective view from the right and in exploded view, the handle and the part of the blade according to Figure 25 and in closed position.
Figure 27 shows, in side view from the right, a part of a rotational body present on the handle according to Figure 25 and in open position.
Figure 28 shows, in perspective view from the left, two inserts present in the handle according to Figure 25.
Figure 29 shows, in perspective view from the left, the inserts according to Figure 28.
Figure 30 shows, in perspective view from the right, the inserts according to Figure 28.
Figure 31 shows, in side view, the blade according to Figure 25.
Figure 32 shows, in partly sectioned perspective view from the left, an additional alternative embodiment of a part of a handle (half) and a part of a blade according to the invention and in closed position.
Figure 33 shows, in partly sectioned perspective view from the left, the part of the handle and the part of the blade according to Figure 32 and in open position.
Figures 34a and b show, in perspective views, the handle according to Figure 32 and without fastening device.
Figures 35a, b and c show, in perspective views and in different angles, two inserts present in the handle according to Figure 32.
Figure 36 shows, in perspective view from the left and from exploded view, an actuation device present on the handle according to Figure 32.
Figures 37a, b and c show, in perspective views and from different angles, parts included in a rotational body present on the handle according to Figure 32.
Figure 38 shows, in perspective view from the left, two shafts present on the handle according to Figure 32.
Figure 39 shows, in side view, the blade according to Figure 32 and the end of the blade for connection to the handle in partial enlargement.
Figure 40a shows, in side view and in exploded view, parts of a fastening device included in an additional alternative embodiment of a saw according to the invention, the parts being shown in a position that corresponds to an open position.
Figure 40b shows, in side view, the parts according to Figure 40a in contact with a blade according to the present embodiment and in open position.
Figure 40c shows, in side view and in exploded view, the parts according to Figure 40a, the parts being shown in a position that corresponds to the closed position.
Figure 40d shows, in side view, the parts according to Figure 40a in contact with a blade according to the present embodiment and in closed position.
Figure 40e shows, in perspective view and in exploded view, the parts according to Figure 40a having a somewhat modified shape and in closed position.
Figure 41 shows, in side view, the blade according to Figure 40 having a somewhat modified shape.

### Description of Embodiments

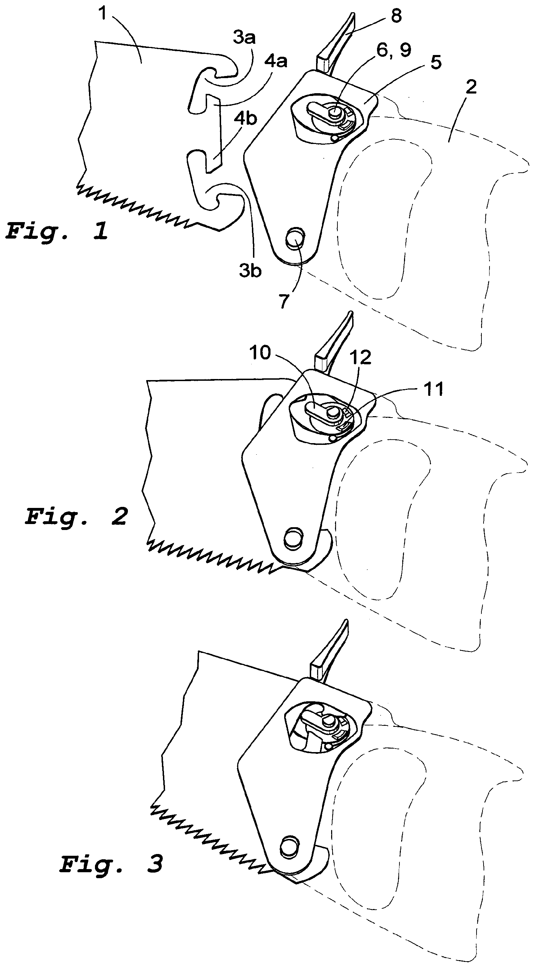

From the Figures 1-9, it is seen in sequence how a blade 1 according to the invention is being fitted in a handle 2 according to the invention, consequently a saw according to the invention being obtained. The blade 1 is equipped with a cut out 3 in the end thereof facing the handle, see Figure 1. The cut out 3 is symmetrically shaped, i.e., an upper half 3a of the cut out 3, such as it is seen in the figure, is a mirror image of a lower half 3b. Furthermore, the blade 1 is equipped with two side spring tongues 4a, 4b, which are characterized in that they, each one, have an ability to spring somewhat laterally out from the blade 1, i.e., spring substantially perpendicular to the substantial plane of extension of the blade 1.

The handle 2 is equipped with a fastening device that, in a first embodiment according to the Figures 1-9, comprises two plates 5 situated at a distance from each other, a rotational body 6 and a second shaft 7. The plates 5 are together somewhat movable in relation to the rest of the handle 2 and also in relation to the rest of the fastening device. The rotational body 6 consists of a plurality of co-rotating parts and is operated by an actuation device 8, which via a first shaft 9 is connected to the rest of the rotational body 6. The shafts 7, 9 extend substantially perpendicular to the substantial plane of extension of the fastening device, i.e., the substantial plane of extension of the plates 5. The shafts 7, 9 also extend through the plates 5, the first shaft 9 being mounted with a play in the form of a circumferential opening in a first end of the respective plate 5 (the upper end of the respective plate 5 such as they are shown in the Figures 1-9) and the second shaft 7 is mounted with a play in the form of an elongate recess in a second end of the respective plate 5 (the lower end of the respective plate 5 such as they are shown in the Figures 1-9).

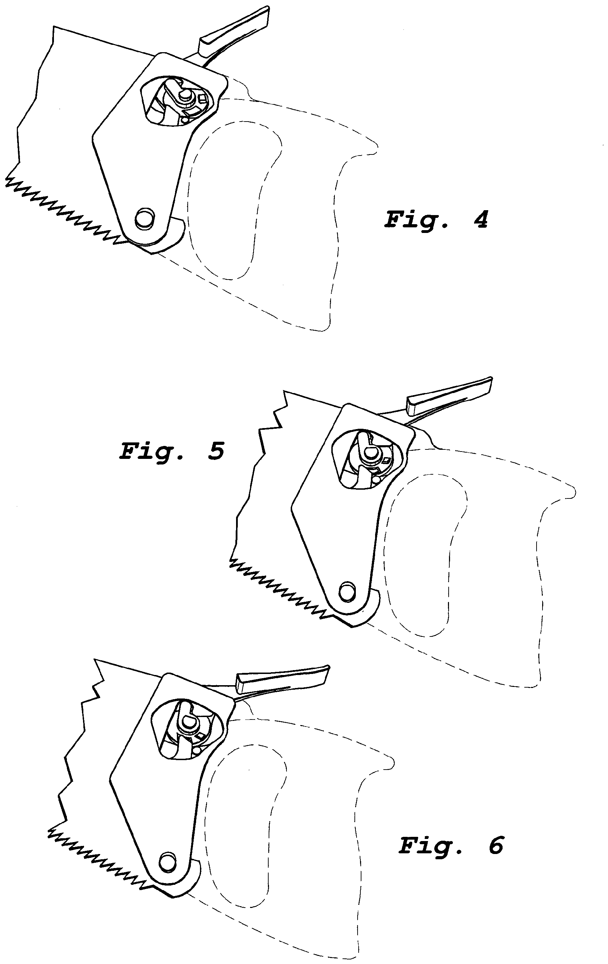

Upon the fitting, first the second shaft 7 present on the handle 2 is placed in the lower half 3b of the cut out 3 in the blade 1, see Figure 2, and then the blade 1 is turned in the substantial plane of extension thereof until the rotational body 6 reaches the bottom in the upper half 3a of the cut out 3, see Figure 3. Next, a locking phase follows, the rotational body 6 being operated by the actuation device 8 in such a way that the free end of the actuation device 8 is pressed in a continuous motion against the handle 2, see the Figures 4-9. During this locking process, the blade will also be pulled further closer to the handle since a finger-like formation 10 of the rotational body 6 co-operates with the correspondingly shaped upper part 3a of the cut out 3 in the blade 1.

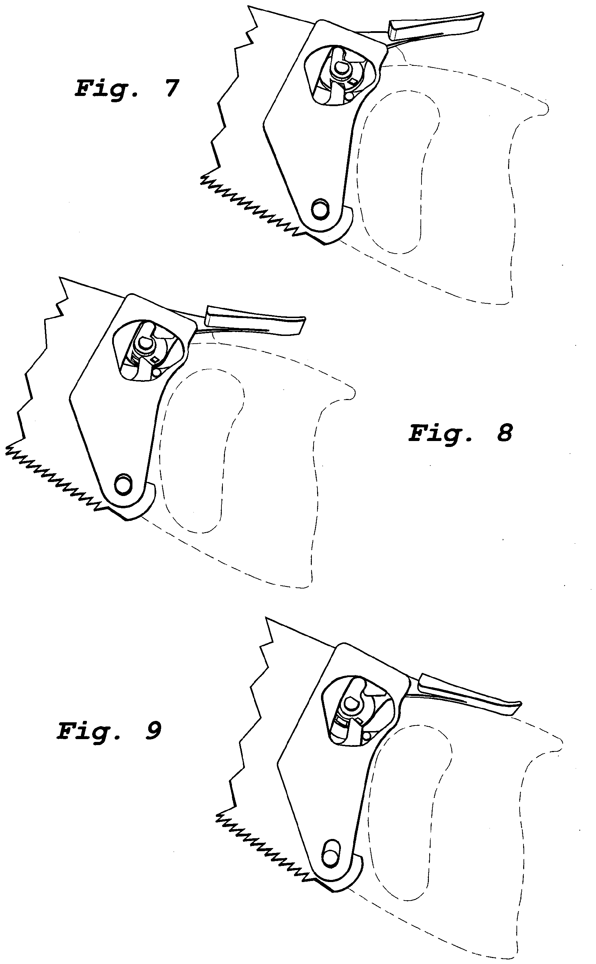

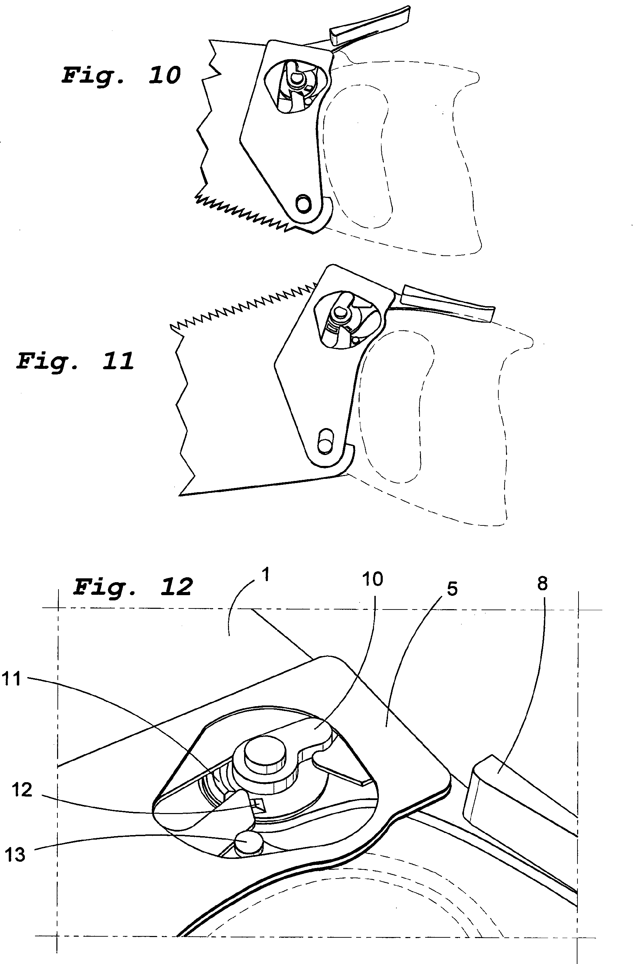

On the rotational body 6, there are also, in the present first embodiment, a bulge 11 and a first stop lip 12. The bulge 11 reaches the side spring tongue 4a in the position of the rotational body 6 that corresponds to Figure 5, presses the side spring tongue 4a out/up and passes under the same in the position of the rotational body 6 that corresponds to the Figures 6-8, and leaves the side spring tongue 4a in the position of the rotational body 6 that corresponds to Figure 9, in which position the bulge 11 and the stop lip 12 together lock the side spring tongue 4a and thereby the blade in position in the handle. This locked position is seen more clearly in partial enlargement in Figure 12. The bulge 11 has a length in the peripheral direction (i.e., a direction that is substantially perpendicular to a radius through the first shaft 9, which radius is substantially perpendicular to the substantial direction of extension of the first shaft 9) that approximately corresponds to a distance between the side spring tongue 4a and the rest of the blade 1, i.e., the bulge 11 is accommodated with precision in the space between the side spring tongue 4a and the rest of the blade 1. The edges of the bulge 11 against the side spring tongue 4a and the rest of the blade 1 are chamfered. The edge of the stop lip 12 facing the side spring tongue 4a is, however, not chamfered in order to give the most stable possible locking. One of the plates 5 is equipped with a particular driver 13, which makes that the blade in the locked position presses the plates 5 as close to the handle as possible.

A disassembly of the blade 2 takes place in an analogous way. Additional force is initially required to overcome the resilient force of the side spring tongue 4a when the bulge 11, by the actuation device 8 being spaced apart from the handle 2, is brought to lift the side spring tongue 4a and pass under the same. In Figure 10, it is seen how the bulge 11 is positioned precisely under the side spring tongue 4a when the actuation device 8 has been spaced apart from the handle 2 into a position that for the fitting phase corresponds to the position according to Figure 7.

In Figure 11, it is seen how the blade instead has been fitted upside down in the handle, something that is possible by the fact that the cut out 3 has a symmetrical design. A saw having the blade fitted in this way makes sawing upwards toward, for instance, a ceiling, comfortable.

Blades 1 may be manufactured with different angles between the substantial direction of extension of the cut out 3 in the plane of the blade and the toothed edge of the blade, which blades become suitable for different fields of application. Also the level/position of the cut out 3 on the blade end may be varied, i.e., the cut out 3 may be placed differently far from the toothed edge of the blade.

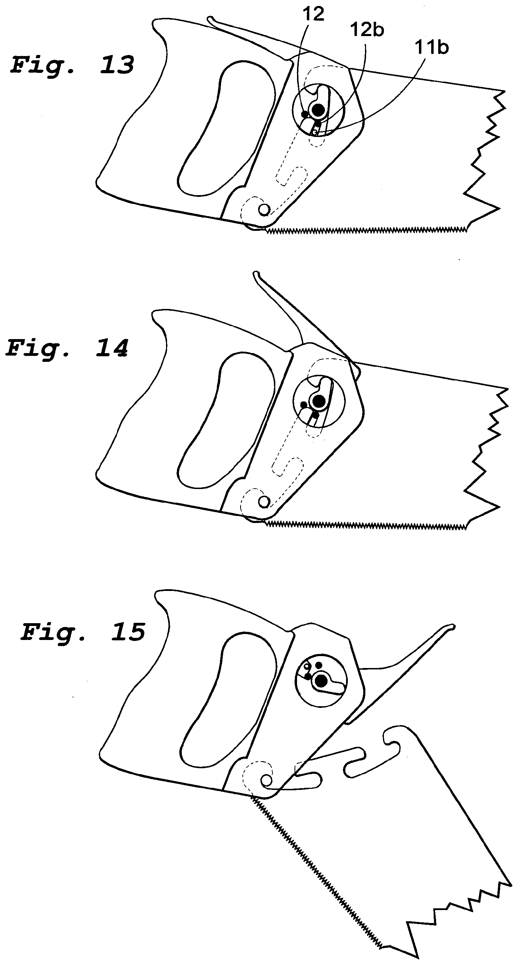

In a second embodiment of the invention, the bulge 11 has been replaced by a second stop lip 12b, the blade 1 in the locked position being entirely locked between the stop lips 12, 12b, see Figure 13. In addition to this, a release bulge 11b is present, radially outside the stop lips 12, 12b, that only is used to first lift the side spring tongue 4a so that after that, a stop lip 12b can pass the side spring tongue 4a when disassembling a blade 1. By lifting the actuation device 8 approx. 20°, the release bulge 11b is brought in under the side spring tongue 4a and lifts the same, see Figure 14, after which further lifting of the actuation device 8 also turns the stop lips 12, 12b and the blade 1 is released, see Figure 15.

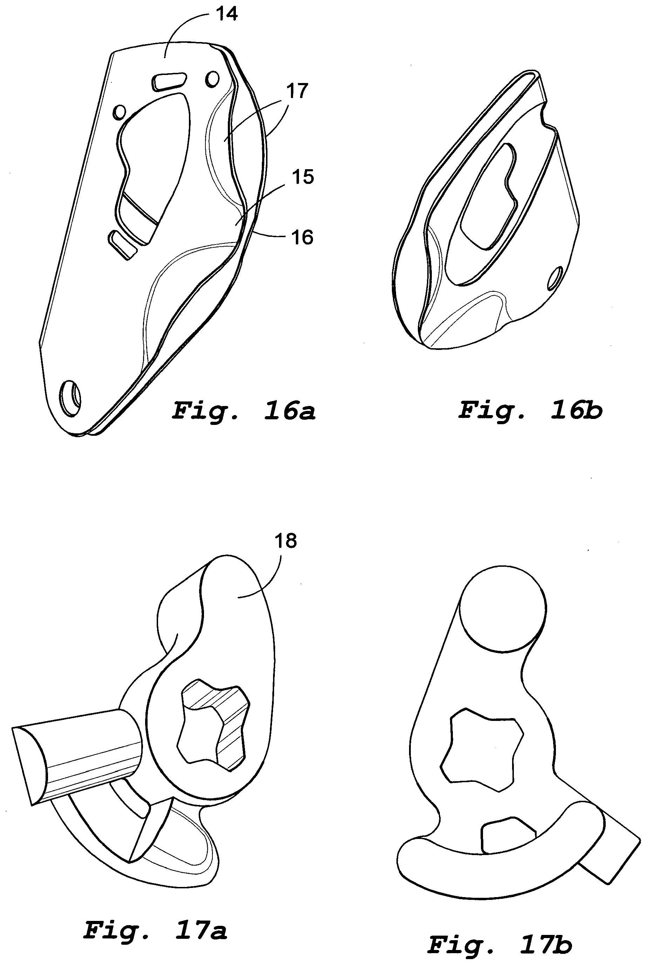

In each one of Figures 16a and 16b, an insert 14 is seen manufactured from one and the same piece of plate, which insert may be used, i.e., originally be fitted by the manufacturer of the tool, in the space between the plates 5 to allow the use of saw blades of different thicknesses in one and the same handle, as well as to further improve the stability in the retention of the blade locked in the handle. The insert 14 is manufactured with an inherent initial stress resulting in a first branch 15 always aiming to keep a certain distance to a second branch 16. In the branches 15, 16, there are pressed protuberances 17 that, when the insert 14 is placed in the space between the plates 5, contribute to provide a larger pressure than otherwise from other parts of the insert 14 against a blade 1 that is being fitted and/or is fitted between the branches 15, 16. The insert 14 is also somewhat movable in relation to the rest of the handle 2 and also in relation to the rest of the fastening device, i.e., also in relation to the plates 5.

When the fastening device is maximally open, i.e., the key 8 entirely open, and no blade 1 is fitted in the handle 2, the distance between the branches 15, 16 is maximal. When a blade 1 is being fitted and the actuation device 8 is being closed, i.e., the rotational body 6 is turned in the locking direction, the insert 14 moves further inwards between the plates 5 toward the handle, the pair-wise substantially modifiedly conical shape of the pressed protuberances 17 making that the pressure generated by the plates 5 on the insert 14 increases successively, which in turn resulting in the pressure generated by the branches 15, 16 on the blade 1 also increasing successively. When the actuation device 8 has been entirely closed, i.e., the rotational body 6 has been turned maximally, the blade 1 is retained maximally stably and entirely free of play in the handle 2.

When a blade 1 is being dismounted and the actuation device 8 is being opened, i.e., the rotational body 6 is turned in the unlocking direction, the insert 14 moves outwards between the plates 5 in the direction from the handle, the pair-wise substantially modifiedly conical shape of the pressed protuberances 17 making that the pressure generated by the plates 5 on the insert 14 decreases successively, which in turn resulting in the pressure generated by the branches 15, 16 on the blade 1 also decreasing successively. When the actuation device 8 has been opened entirely, i.e., the rotational body 6 has been turned maximally, the blade 1 can be removed from the handle 2 and the fastening device is maximally open.

The motion of the insert 14 between the plates 5 takes place around and/or in relation to said first turning axis 6 in said first end of the fastening device and around and/or in relation to said second turning axis 7 in said second end of the fastening device.

The insert 14 may be present in constructions according to each one of the described first and second embodiments and is, if so, a part of the fastening device. In an example not according to the invention, the insert 14 may also be present in a construction where the plates 5 are lacking and the insert 14 accordingly is fitted in a groove directly in the handle 2, walls in this groove exerting the pressure on the insert 14 that otherwise is exerted by the plates 5 at assembly and/or disassembly of blades 1 in the handle 2.

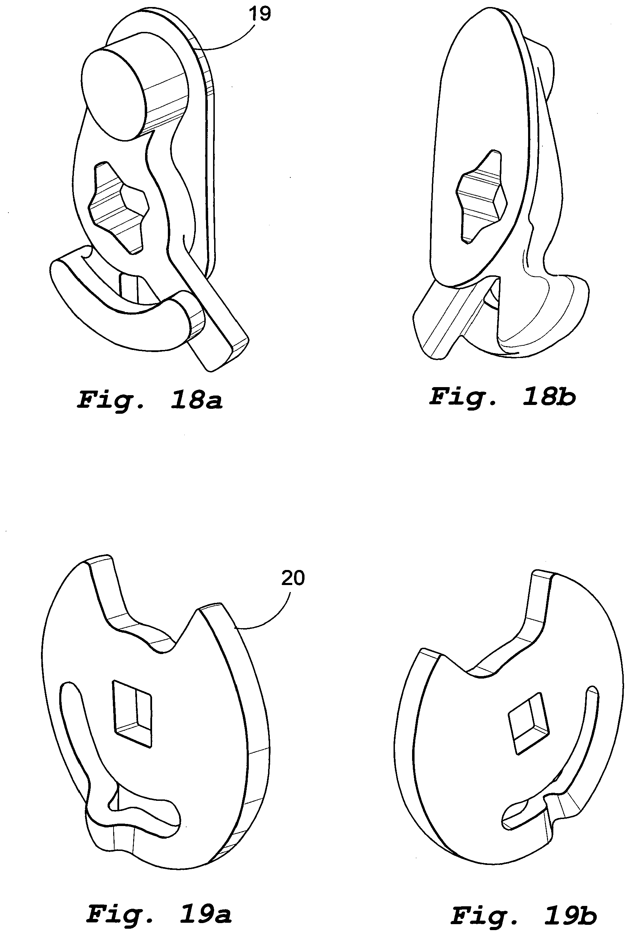

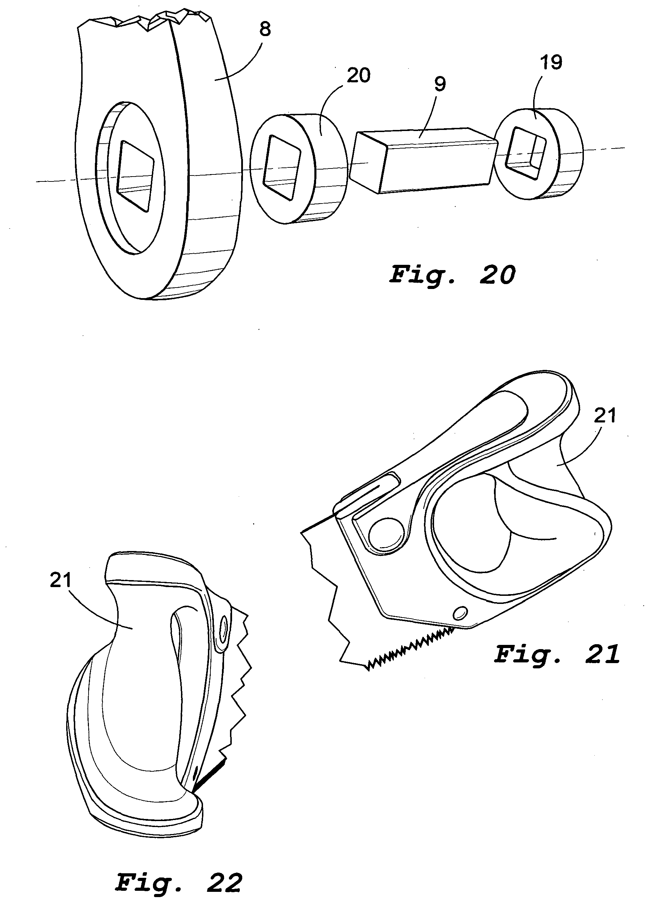

In each one of Figures 17a and 17b, a first part 18 of the rotational body 6 according to said first embodiment of the invention is seen. In each one of Figures 18a and 18b, a corresponding first part 19 of the rotational body 6 according to said second embodiment of the invention is seen, also a second part 20 of the rotational body 6 being required, see each one of Figures 19a and 19b. The way the parts 19, 20 in principle are placed on the first shaft 9 is seen in the exploded view according to Figure 20, a part of the actuation device 8 also being seen. In Figure 20, each one of the parts 19 and 20 is represented by a body having, in comparison with the real bodies, a very simplified design. Thus, Figure 20 relates to said second embodiment - in said first embodiment, the part 20 is accordingly spared and the part 19 is replaced by the part 18 according to the above stated.

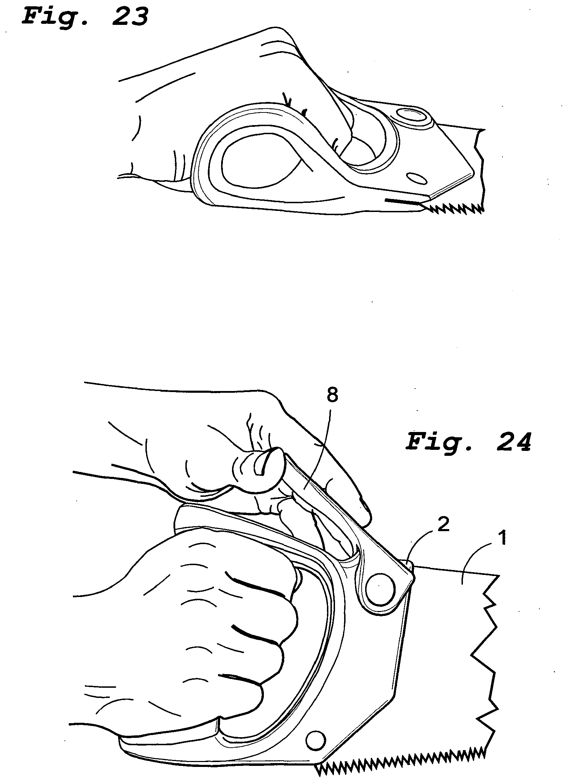

The handle 2 is ergonomically and asymmetrically shaped and has a first gripping part 21 having a substantial direction of extension that forms an angle ("tilt") of 5-20°, preferably 10-15° and most preferably 12,5° in relation to a substantial plane of extension of the blade 1, see Figures 21-24. Said first gripping part 21 is the one that rests in the palm of the hand when the saw/the handle is gripped. Also all possible angles between a substantial plane of extension of the handle 2 and a substantial plane of extension of the blade 1 may be varied in the production of the handle 2 in order to make sawing as efficient and comfortable as possible. The handle 2 shown in Figures 21-24 is made for right-handed persons, but the shape may naturally be mirror-inverted in the manufacture to fit left-handed persons. The size in general may also be varied, such as height, width and so on to fit differently large hands.

Even if the handle 2 in Figures 21-24 has no plates 5 and neither no insert 14, but the blade 1 here has been fitted detachably directly in the handle 2, here it should be pointed out that the handle, where appropriate after modification regarding the attachment of the blade in accordance with what has been described above, can be used in combination with any one of the embodiments mentioned in this description. The handle 2 may also be used in combination with fixedly fitted saw blades, by which it is understood permanently fitted saw blades that cannot be dismounted unless the saw is destroyed and/or seriously damaged, wherein design details that intend to facilitate the exchange of blades naturally can be spared and traditional fastening elements of the type screws, bolts, rivets and/or the like be used instead. Glue or the like may also be used. Thus, it is fully possible to conceive a saw comprising at least one handle 2 and at least one blade 1, the blade 1 being permanently fitted in the handle 2, wherein said handle 2 is ergonomically and asymmetrically shaped and has at least one first gripping part 21 having a substantial direction of extension that forms an angle of 5-20°, preferably 10-15° and most preferably 12,5° in relation to a substantial plane of extension of said blade 1.

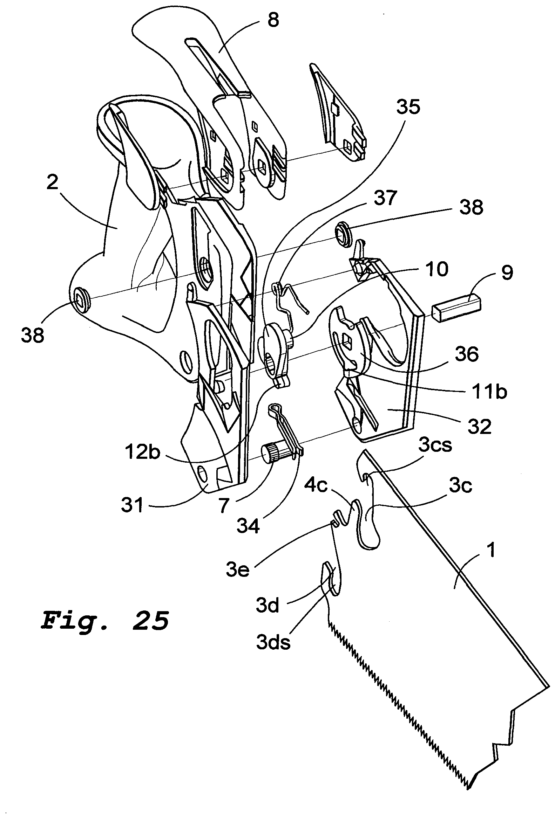

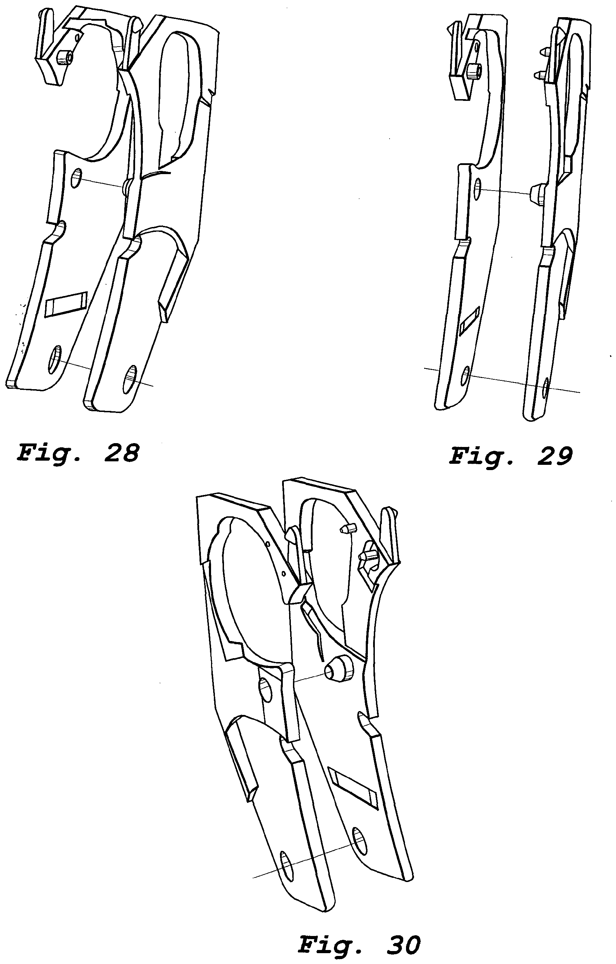

In the Figures 25-31, a further embodiment of the saw according to the invention is seen. The handle 2 has a fastening device for the blade 1, which fastening device comprises a rotational body 6, an actuation device 8, a first insert 31, a second insert 32, a second shaft 7, a positioning pin 33 and a first spring 34. The rotational body 6, in turn, comprises an eccentric 35, a washer 36, a shaft 9, a second spring 37 and two bearings 38. The blade 1 has three through cut outs 3c, 3d, 3e extending from an edge of the blade, the first cut out having a first recess 3cs having substantially parallel sides, the second cut out having a second recess 3ds having substantially parallel sides, while the third cut out 3e constitutes a third recess 3es.

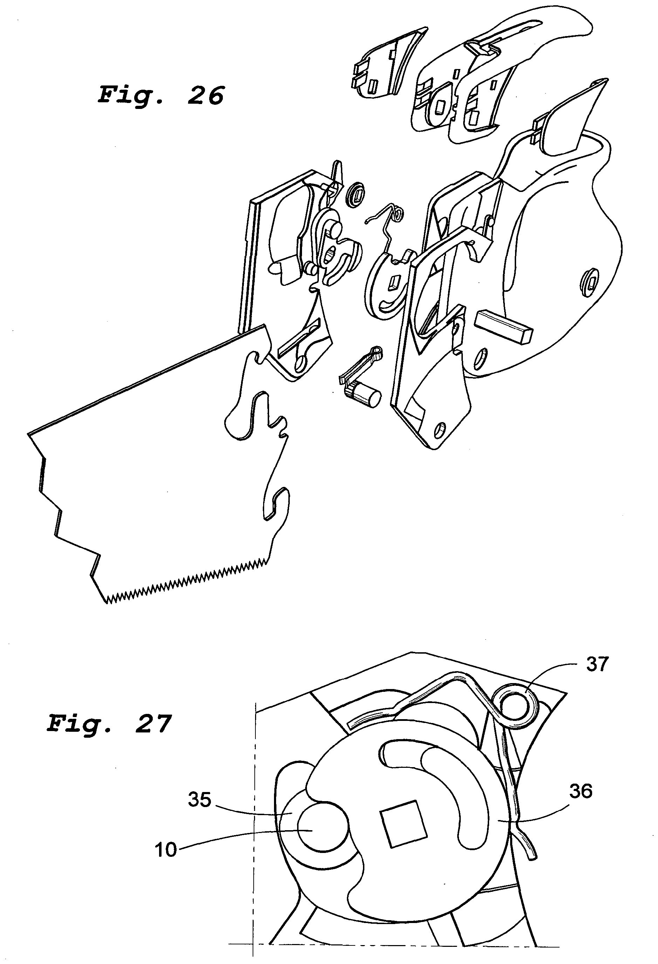

The fitting takes place in an analogous way in comparison with the first embodiment of the invention. First, the second shaft 7 of the handle 2 is placed in the second (the lower one in Figure 25) cut out 3d in the blade 1, after which the blade 1 is turned in the substantial plane of extension thereof until the eccentric 35 reaches the bottom in the first (the upper one in Figure 25) cut out 3c, see also Figure 27. During this motion, also the positioning pin 33 fitted directly to the handle 2 or to the inserts 31, 32 is introduced into the third cut out 3e of the blade 1, and the blade is placed between the two branches of the spring 34. Next, a locking phase follows, the rotational body 6 being operated by the actuation device 8 in such a way that the free end of the actuation device 8 is pressed in a continuous motion against the handle 2, involving a turning of the rotational body 6 of at least approx. 90°. During this locking process, the blade will also be pulled further closer to the handle since a finger-like formation 10 of the eccentric 35 co-operates with the correspondingly shaped first cut out 3c in the blade 1. Thus, when the blade 1 has been fitted in the saw, the finger-like formation 10 rests on the eccentric 35 in the first recess 3cs, the second shaft 7 in the second recess 3ds, and the positioning pin 33 in the third recess 3es. The blade 1 also has a side spring tongue 4c.

On the rotational body 6, there are, also in the present embodiment, a first stop lip 12 and a second stop lip 12b on the eccentric 35, the side spring tongue 4c in the locked position being entirely locked between the stop lips 12, 12b. In addition to this, a release bulge 11b is present on the washer 36, radially outside the stop lips 12, 12b, which release bulge 11b only is used to first lift the side spring tongue 4c so that after that, a stop lip 12b can pass the side spring tongue 4c when disassembling a blade 1. By lifting the actuation device 8 approx. 20°, the release bulge 11b is brought in under the side spring tongue 4c and lifts the same, after which further lifting of the actuation device 8 also turns the stop lips 12, 12b and the blade 1 is released.

The second spring 37 may, by the co-operation with a particular rib on the eccentric 35 in the open position of the actuation device 8, contribute to a parking position of the actuation device 8, involving that the blade 1 has to be pulled out of the handle 2 by hand the last bit upon disassembly. In this way, the risk is minimized that the blade 1 in an undesired moment falls freely out of the handle 2.

The first spring 34 has the general function of exerting a distancing force on the inserts 31, 32 when the same are placed in the handle 2. In this way, the force action from the spring 34 replaces the inherent initial stress that previously has been described in connection with the double-sided insert 14 found in a previously described embodiment of the invention.

When the fastening device is maximally open, i.e., the actuation device 8 entirely open, and no blade 1 is fitted in the handle 2, the distance between the inserts 31, 32 is maximal. When a blade 1 is being fitted and the actuation device 8 is being closed, i.e., the rotational body 6 is turned in the locking direction, the inserts 31, 32 move further inwards in the handle, their modifiedly conical shape making that the pressure generated by the handle 2 on the inserts 31, 32 increases successively and that thereby the pressure generated by the inserts 31, 32 on the blade 1 increases successively. When the actuation device 8 has been entirely closed, i.e., the rotational body 6 has been turned maximally, the blade 1 is retained maximally stably and entirely free of play in the handle 2.

When a blade 1 is being dismounted and the actuation device 8 is being opened, i.e., the rotational body 6 is turned in the unlocking direction, the inserts 31, 32 move outwards in the handle, the pressure generated by the handle 2 on the inserts 31, 32 decreasing successively, which in turn resulting in the pressure generated by the inserts 31, 32 on the blade 1 also decreasing successively. When the key 8 has been opened entirely, i.e., the rotational body 6 has been turned maximally, the blade 1 can be removed from the handle 2 and the fastening device is maximally open.

The motion of the inserts 31, 32 in the handle 2 takes place around and/or in relation to said first turning axis 6 in said first end of the fastening device and around and/or in relation to said second turning axis 7 in said second end of the fastening device.

The thickness of the blade varies between approx. 0,73 mm and approx. 1,15 mm, but is usually approx. 1,0 mm (applies to all embodiments). The side spring tongue 4c has a length of approx. 5 mm - approx. 90 mm, preferably approx. 5 mm - approx. 30 mm, and most preferably approx. 21 mm. It has a width of approx. 7 mm - approx. 12 mm, preferably approx. 9 mm - approx. 10 mm, and most preferably approx. 9,7 mm.

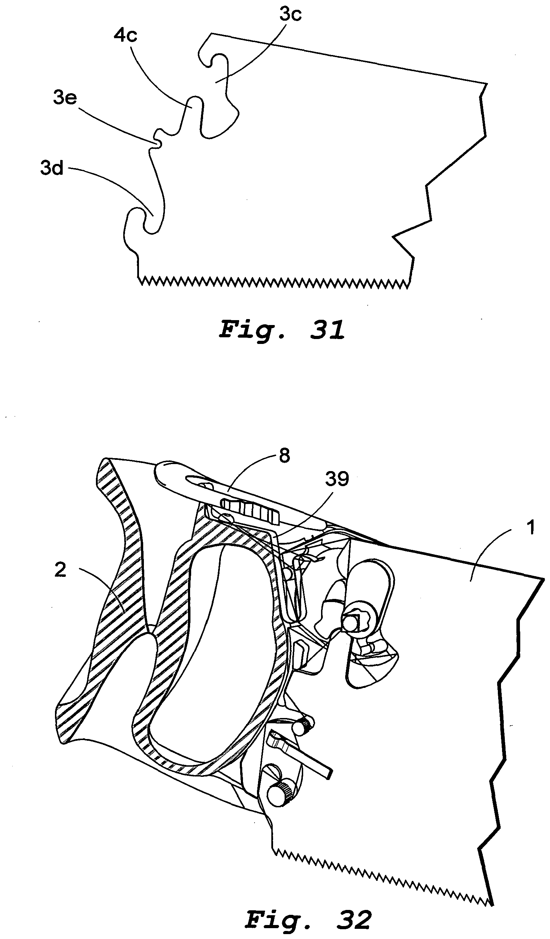

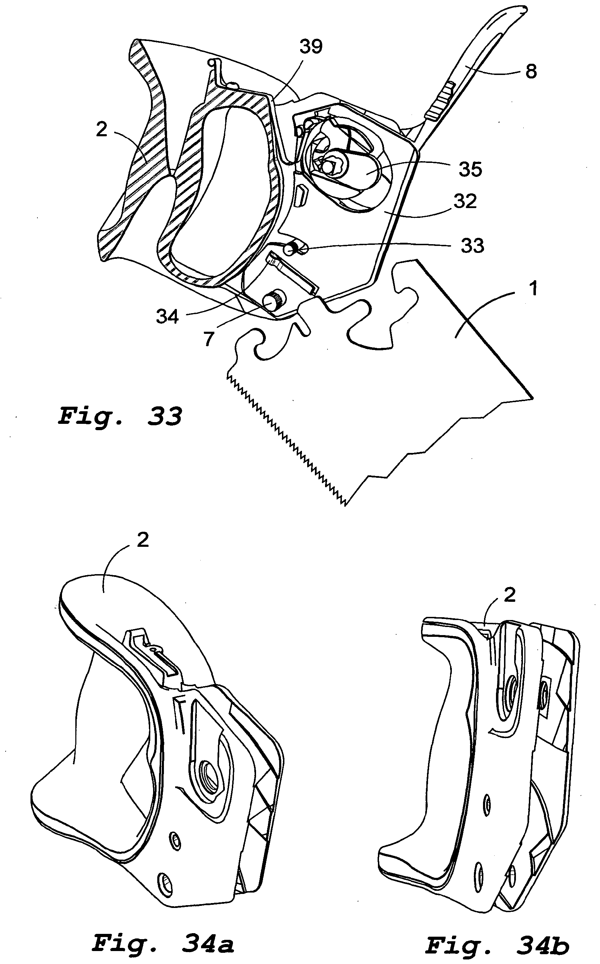

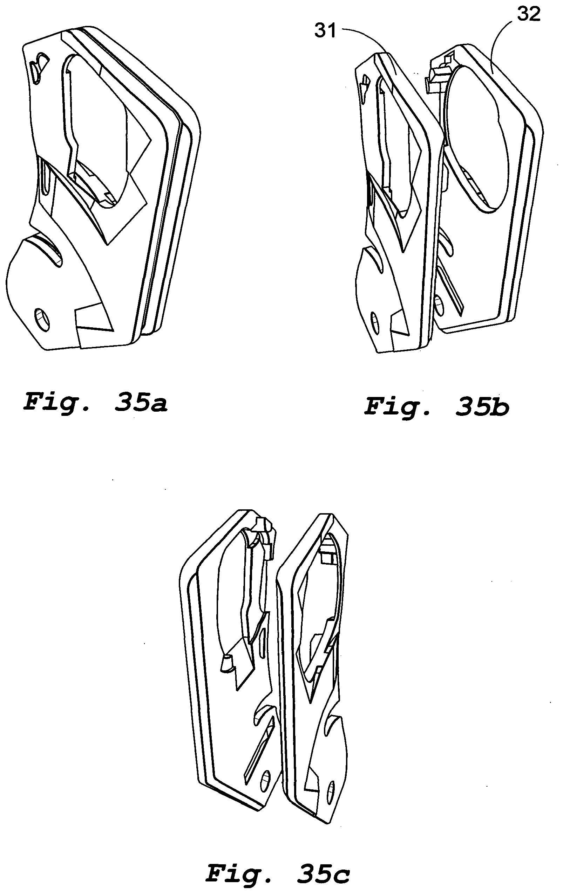

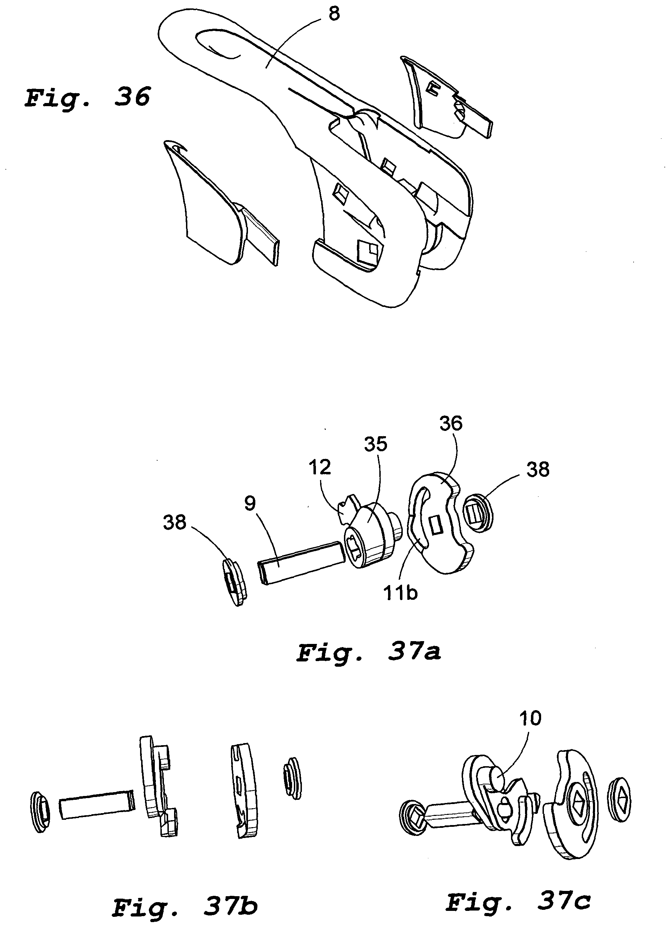

In the Figures 32-39, a further embodiment of the saw according to the invention is seen. Here, a spring 39 has another design and partly function than the second spring 37 according to preceding embodiment. An upper/outer end of the spring 39 affords the actuation device 8, when this is in the closed position, i.e., closest to the handle 2, a snap locking. An inner end of the spring 39 affords, like the second spring 37 according to preceding embodiment, the actuation device 8 a parking position by the co-operation with a particular rib on the eccentric 35 in the open position of the actuation device 8, involving that the blade 1 has to be pulled out of the handle 2 by hand the last bit upon disassembly. In this way, the risk is minimized, as mentioned above, that the blade 1 in an undesired moment falls freely out of the handle 2.

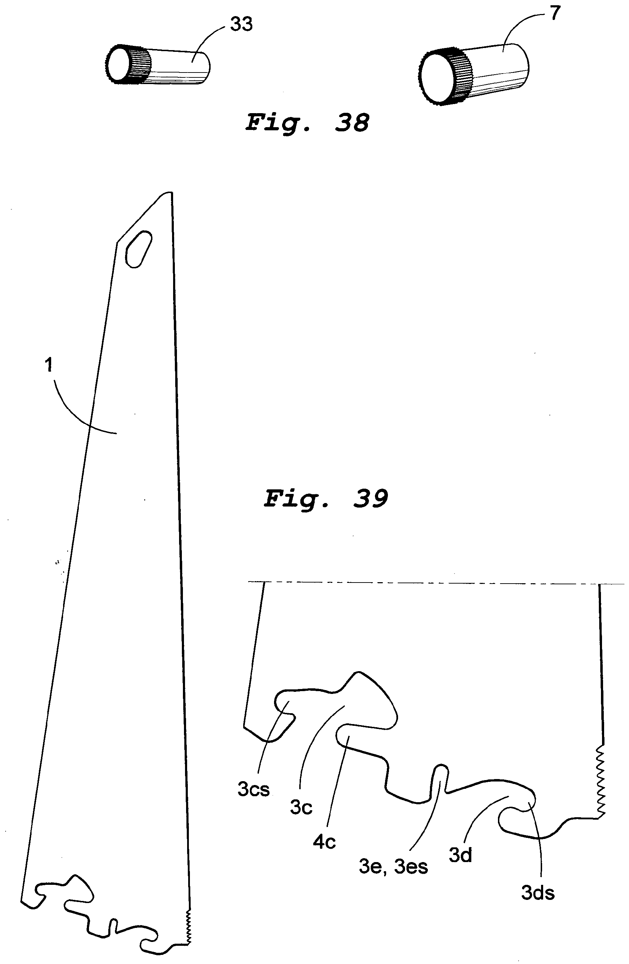

The cut out configuration of the blade 1 is also somewhat altered and is most clearly seen in Figure 39. Also here, the blade 1 has three through cut outs 3c, 3d, 3e extending from an edge of the blade, the first cut out 3c having a first recess 3cs having substantially parallel sides, the second cut out 3d having a second recess 3ds having substantially parallel sides, while the third cut out 3e constituting a third recess 3es. The placement of the third recess 3es and the area above the same in Figure 39 are, however, somewhat altered in comparison with the preceding embodiment, and therefore, in this case, the third cut out 3e can be regarded as a part of the second cut out 3d.

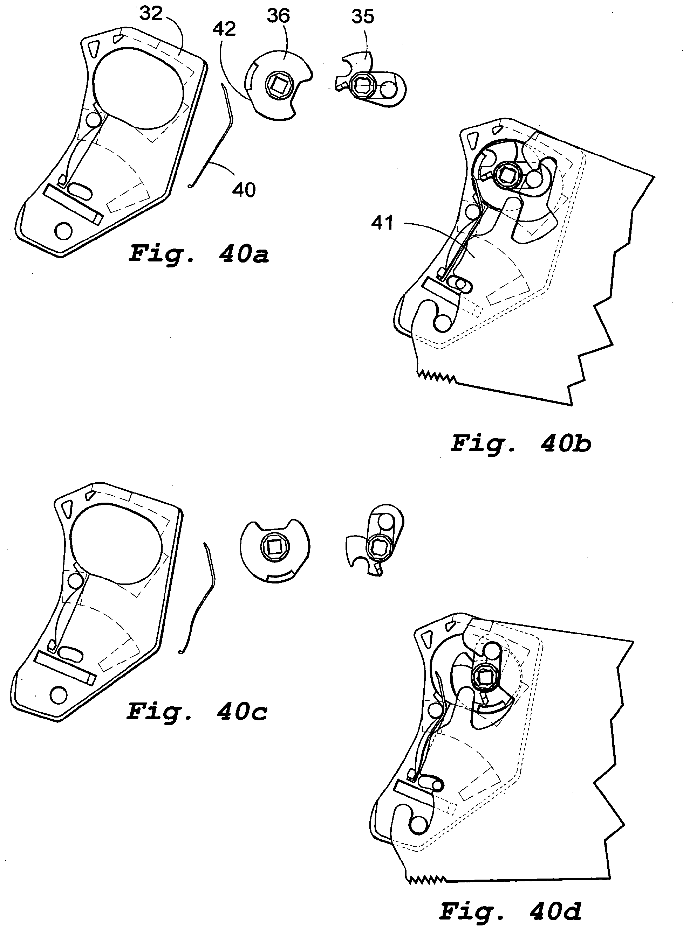

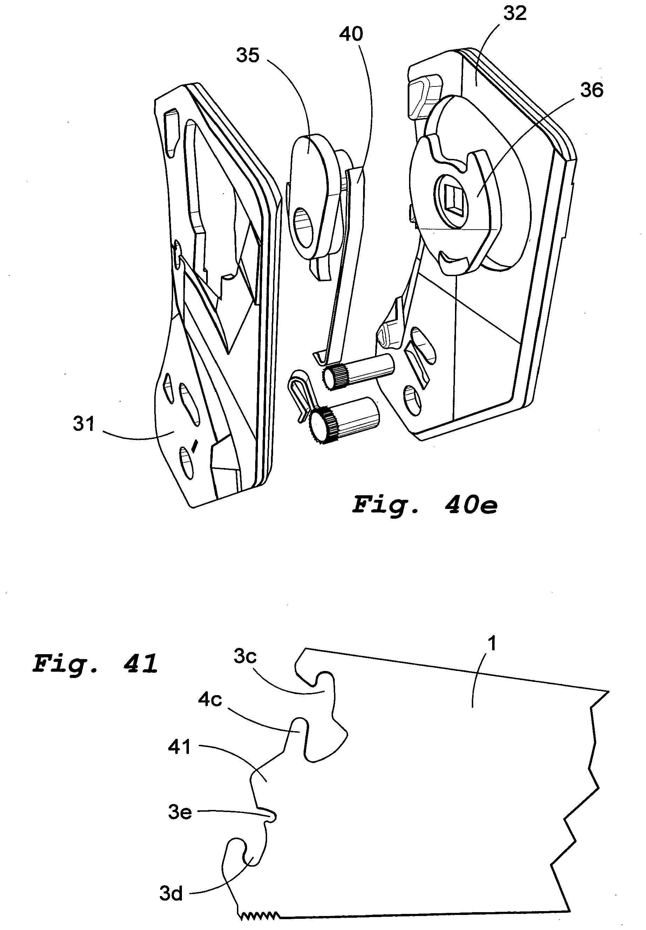

In the Figures 40a-e and 41, a further embodiment of the saw according to the invention is seen. Here, a spring 40 has another design and partly function than the spring 39 of preceding embodiment. In Figure 40a, an insert 32, an eccentric 35, a washer 36 and the spring 40 are seen in exploded view, the shown parts being placed in a position in relation to each other that corresponds to the open position of the actuation device 8. The parts assembled together with a blade 1 are seen in Figure 40b. When the actuation device 8 is being closed and the blade 1 is being pulled into the handle 2, an intermediate active part 41 of the end of the blade 1 facing the handle 2 will press on the spring 40 and increasingly deform the same. When the spring 40 is being deformed, it will in turn increasingly act on the inserts 31, 32 so that the pressure generated by the inserts 31, 32 on the blade 1 increases. The closed state is seen in Figures 40c-40e, wherein it should be observed that the spring 40 is depicted loaded in Figures 40c and 40d and unloaded in Figure 40e. The spring 40 may, by the co-operation with a particular plane surface 42 of the washer 36, in the open position of the actuation device 8, contribute to a parking position of the actuation device 8, involving that the blade 1 has to be pulled out of the handle 2 by hand the last bit upon disassembly.

The cut out configuration of the blade 1 is also somewhat altered. Also here, the blade 1 has three through cut outs 3c, 3d, 3e extending from an edge of the blade, the first cut out having a first recess 3cs having substantially parallel sides, the second cut out having a second recess 3ds having substantially parallel sides, while the third cut out 3e constituting a third recess 3es. The placement of the third recess 3es and the area above the same are, however, somewhat altered in comparison with the preceding embodiment. Also in this case, the third cut out 3e can be regarded as a part of the second cut out 3d. In Figure 41, a modification of the blade according to Figures 40b and 40d is seen, the active part 41 being more convex in the substantial plane of extension of the blade 1 and accordingly affecting the spring 40 more.

In general, it applies that the first turning axis 6 extends substantially perpendicular to the substantial plane of extension of the blade 1. The blades are of metal and the inserts most often of plastic, but any other expedient known materials are feasible. By the expressions insert ("inlägg") and insert ("insats") in this description, the same thing is meant.

The invention is not limited to the embodiments shown here, but may be varied within the scope of the subsequent claims.

## Claims

1. Saw comprising at least one handle (2) and at least one blade (1), the handle (2) having at least one fastening device with at least one first part in the form of a rotational body (6), which rotational body (6) can be turned around a first turning axis (6), the blade (1) being detachable from the handle (2) and having at least one through cut out (3, 3a, 3b, 3c, 3d, 3e) extending from an edge of the blade (1), said first turning axis (6) extending through said at least one cut out (3, 3a, 3b, 3c, 3d, 3e), wherein a second part of said fastening device in the form of an insert (14) is movable in relation to said handle (2) at assembly and/or disassembly of said blade (1) in said handle (2), said insert (14) being movable around and in relation to said first turning axis (6) in a first end of said insert (14) and around and in relation to a second turning axis (7) in a second end of said insert (14), **characterized in that** said at least one rotational body (6) is connected with and operated by at least one actuation device (8) of said fastening device, wherein said insert (14) of said fastening device comprises at least one first contact surface that abuts against a first side of the blade (1), and a third part of said fastening device in the form of a second insert comprises at least one second contact surface that abuts against a second side of the blade (1), said first and second contact surfaces retaining and stabilizing the blade (1) in the handle (2), wherein said second and third parts of said fastening device are movable in relation to said handle (2) at assembly and/or disassembly of said blade (1) in said handle (2) with the purpose of facilitating the assembly and/or the disassembly, wherein said second and third parts being movable around and/or in relation to said first turning axis (6) in a first end of said parts respectively and around and/or in relation to a second turning axis (7) in a second end of said parts respectively, said first and second turning axes being directed substantially perpendicular to a substantial plane of extension of said blade, wherein said first turning axis (6) is constituted by said at least one rotational body (6) and wherein said at least one rotational body (6) comprises at least one finger-like formation (10) which upon closure of said at least one actuation device (8) in connection with fitting of said blade (1) in said handle (2) co-operates with said at least one cut out (3, 3a, 3b, 3c, 3d, 3e) in said blade (1) and pulls said blade (1) in a direction toward said handle (2) inwards between two pressure generating plates (5) increasing pressure successively on the insert (14) and **in that** connection pulls in a part of said blade (1) in place between said first and second contact surfaces of said fastening device, while on the other hand said finger-like formation (10) upon opening of said at least one actuation device (8) in connection with disassembly of said blade (1) in said handle (2) co-operates with said at least one cut out (3, 3a, 3b, 3c, 3d, 3e) in said blade (1) and presses said blade (1) in a direction away from said handle (2) outwards between th plates (5) successively decreasing the generated pressure on the insert (14) and **in that** connection presses a part of said blade (1) out of the position between said first and second contact surfaces of said fastening device.

2. Saw according to claim 1, wherein said blade (1) has at least one side spring tongue (4a, 4b, 4c) that can be brought to spring in a direction substantially perpendicular to the substantial plane of extension of the blade (1).

3. Saw according to any one of the preceding claims, wherein said insert (14) of said fastening device alone comprises at least one first contact surface that abuts against a first side of the blade (1), at least one second contact surface that abuts against a second side of the blade (1), and at least one third contact surface that abuts against at least one groove adapted therefor in at least one additional part (5) of said fastening device or in the handle (2), said first and second contact surfaces retaining and stabilizing the blade (1) in the handle (2).

4. Saw according to claim 3, wherein said insert (14) of said fastening device is movable in relation to said handle (2) at assembly and/or disassembly of said blade (1) in said handle (2) with the purpose of facilitating the assembly and/or the disassembly.

5. Saw according to any one of claims 2-4, wherein said fastening device has at least one spring, which upon opening of said at least one actuation device (8) in connection with disassembly of said blade (1) in said handle (2) presses said blade (1) in a direction away from said handle (2).

6. Handle (2) having at least one fastening device with at least one first part in the form of a rotational body (6), which rotational body (6) can be turned around a first turning axis (6), said handle being connectable to a blade (1) having at least one through cut out (3, 3a, 3b, 3c, 3d, 3e) extending from an edge of the blade (1) and said rotational body (6) being intended to co-operate with said cut out (3, 3a, 3b, 3c, 3d, 3e), said rotational body (6) being able to be turned at least approx. 90° around said first turning axis (6), wherein a second part of said fastening device in the form of an insert (14) is movable in relation to said handle (2) at assembly and/or disassembly of said blade (1) in said handle (2), said insert (14) being movable around and in relation to said first turning axis (6) in a first end of said insert (14) and around and in relation to a second turning axis (7) in a second end of said insert (14), **characterized in that** said at least one rotational body (6) is connected with and operated by at least one actuation device (8) of said fastening device, wherein said insert of said fastening device comprises at least one first contact surface that abuts against a first side of the blade (1), and a third part of said fastening device in the form of a second insert comprises at least one second contact surface that abuts against a second side of the blade (1), said first and second contact surfaces being intended to retain and stabilize the blade (1) in the handle (2), wherein said first and second inserts are movable in relation to the handle (2) at assembly and/or disassembly of the blade (1) in the handle with the purpose of facilitating the assembly and/or the disassembly, wherein said second and third parts being movable around and/or in relation to said first turning axis (6) in a first end of said parts respectively and around and/or in relation to a second turning axis (7) in a second end of said parts respectively, said first and second turning axes being directed substantially perpendicular to a substantial plane of extension of said blade, wherein said first turning axis (6) is constituted by said at least one rotational body (6) and wherein said at least one rotational body (6) comprises at least one finger-like formation (10), which upon closure of said at least one actuation device (8) in connection with fitting of the blade (1) in the handle (2) is intended to co-operate with said at least one cut out (3, 3a, 3b, 3c, 3d, 3e) in said blade (1) and pull said blade (1) in a direction toward the handle (2) inwards between two pressure generating plates (5) increasing pressure successively on the insert (14) and **in that** connection pull in a part of said blade (1) in place between said first and second contact surfaces of said fastening device, while on the other hand said finger-like formation (10) upon opening of said at least one actuation device (8) in connection with disassembly of said blade (1) in the handle (2) is intended to co-operate with said at least one cut out (3, 3a, 3b) in said blade (1) and press said blade (1) in a direction away from the handle (2) outwards between th plates (5) successively decreasing the generated pressure on the insert (14) and **in that** connection press a part of said blade (1) out of the position between said first and second contact surfaces of said fastening device.

7. Handle (2) according to claim 6, wherein said actuation device (8) is in the form of an elongate arm (8) that connects to the rotational body (6) in one end of the elongate arm (8).

8. Handle (2) according to any one of the claims 6-7, wherein said insert (14) of said fastening device alone comprises at least one first contact surface for abutment against a first side of the blade (1), at least one second contact surface for abutment against a second side of the blade (1), and at least one third contact surface that abuts against at least one groove adapted therefor in at least one additional part (5) of said fastening device or in the handle (2), said first and second contact surfaces being intended to retain and stabilize the blade (1) in the handle (2).

9. Handle (2) according to claim 8, wherein said insert (14) is movable in relation to the handle (2) at assembly and/or disassembly of the blade (1) in the handle with the purpose of facilitating the assembly and/or the disassembly.

10. Handle (2) according to any one of the claims 6-9, wherein said fastening device shows at least one spring, which upon opening of said at least one actuation device (8) in connection with disassembly of said blade (1) in the handle (2) presses said blade (1) in a direction away from the handle (2).

11. Blade (1) connectable to a handle (2) having at least one fastening device with at least one first part in the form of a rotational body (6), which rotational body (6) can be turned around a first turning axis (6), the blade (1) having at least one through cut out (3, 3a, 3b, 3c, 3d, 3e) extending from an edge of the blade (1) and said cut out (3, 3a, 3b, 3c, 3d, 3e) being intended to co-operate with said rotational body (6) and that said at least one cut out (3, 3a, 3b, 3c, 3d, 3e) has at least one first recess (3cs, 3ds, 3es) having substantially parallel sides and being intended to co-operate with a finger-like formation (10) of said rotational body (6) for pulling of the blade closer to the handle when the blade is being locked in the handle and that said at least one cut out (3, 3a, 3b, 3c, 3d, 3e) has at least one second recess having substantially parallel sides and that said at least one cut out (3, 3a, 3b, 3c, 3d, 3e) has at least one third recess having substantially parallel sides, **characterized in that** at least one side spring tongue (4a, 4b, 4c) that can be brought to spring in a direction substantially perpendicular to the substantial plane of extension of the blade (1) is provided in the said edge of the blade (1).

12. Blade (1) according to claim 11, wherein said side spring tongue (4a, 4b, 4c) has a substantial direction of extension, in a substantial plane of extension of the blade (1), that differs from a substantial direction of extension of said first recess by approx. 0-45°, preferably approx. 0-22,5°, and most preferably approx. 10°.

13. Blade (1) according to any one of the claims 11-12, wherein said at least one cut out (3, 3a, 3b, 3c, 3d, 3e) is symmetrical in a substantial plane of extension of the blade (1) and situated in a first end of the blade (1), the blade (1) being fittable in two ways and accordingly invertible in the handle (2).

14. Blade (1) according to claim 13, wherein said at least one cut out (3, 3a, 3b) is symmetrical in respect of a straight line parallel to the toothed edge of the blade (1), the blade (1) forming a first angle with the handle (2) in the substantial plane of extension of the saw if the blade (1) is fitted in a first way in the handle (2) for sawing substantially downwards and a second angle with the handle (2) in the substantial plane of extension of the saw if the blade (1) is fitted in a second way in the handle (2) for sawing substantially upwards, said first and second angles being equally large.

15. Blade (1) according to claim 13, wherein said at least one cut out (3, 3a, 3b, 3c, 3d, 3e) is symmetrical in respect of a straight line not parallel to the toothed edge of the blade (1), the blade (1) forming a first angle with the handle (2) in the substantial plane of extension of the saw if the blade (1) is fitted in a first way in the handle (2) for sawing substantially downwards and a second angle with the handle (2) in the substantial plane of extension of the saw if the blade (1) is fitted in a second way in the handle (2) for sawing substantially upwards, said first and second angles being differently large.

16. Blade (1) according to claim 13, wherein said at least one cut out (3, 3a, 3b, 3c, 3d, 3e) is unsymmetrical in a substantial plane of extension of the blade (1) and situated in a first end of the blade (1).

17. Blade (1) according to any one of the claims 11-12, wherein said first recess is positioned closest to a first long side of the blade, said second recess is positioned closest to a second long side of the blade, and said third recess is positioned between said first recess and said second recess.

18. Blade (1) according to claim 11, wherein said side spring tongue (4a, 4b, 4c) is situated between said first recess and said third recess of the blade (1).

## Patentansprüche

1. Säge, umfassend mindestens einen Griff (2) und mindestens ein Blatt (1), wobei der Griff (2) mindestens eine Befestigungseinrichtung mit mindestens einem ersten Teil in Form eines Rotationskörpers (6) aufweist, wobei der Rotationskörper (6) um eine erste Drehachse (6) gedreht werden kann, wobei das Blatt (1) vom Griff (2) abnehmbar ist und mindestens eine durchgehende Ausstanzung (3, 3a, 3b, 3c, 3d, 3e) aufweist, die sich von einer Kante des Blatts (1) erstreckt, wobei sich die erste Drehachse (6) durch die mindestens eine Ausstanzung (3, 3a, 3b, 3c, 3d, 3e) erstreckt, wobei ein zweiter Teil der Befestigungseinrichtung in Form eines Einsatzes (14) in Bezug auf den Griff (2) beim Anmontieren und/oder Abmontieren des Blatts (1) an den /von dem Griff (2) bewegbar ist, wobei der Einsatz (14) um und in Bezug auf die erste Drehachse (6) an einem ersten Ende des Einsatzes (14) bewegbar ist und um und in Bezug auf eine zweite Drehachse (7) an einem zweiten Ende des Einsatzes (14) bewegbar ist, **dadurch gekennzeichnet, dass** der mindestens eine Drehkörper (6) mit mindestens einer Betätigungseinrichtung (8) der Befestigungseinrichtung verbunden ist und durch diese betätigt wird, wobei der Einsatz (14) der Befestigungseinrichtung mindestens eine erste Anlagefläche umfasst, die an einer ersten Seite des Blatts (1) anliegt, und ein dritter Teil der Befestigungseinrichtung in Form eines zweiten Einsatzes mindestens eine zweite Anlagefläche umfasst, die an einer zweiten Seite des Blatts (1) anliegt, wobei die erste und die zweite Anlagefläche das Blatt (1) in dem Griff (2) halten und stabilisieren, wobei der zweite und dritte Teil der Befestigungseinrichtung beim Anmontieren und/oder Abmontieren des Blatts (1) an den /von dem Griff (2) in Bezug auf den Griff (2) bewegbar sind, um das Anmontieren und/oder Abmontieren zu erleichtern, wobei der zweite und dritte Teil um und/oder in Bezug auf die erste Drehachse (6) an einem ersten Ende der jeweiligen Teile und um und/oder in Bezug auf eine zweite Drehachse (7) an einem zweiten Ende der jeweiligen Teile bewegbar sind, wobei die erste und zweite Drehachse im Wesentlichen senkrecht zu einer Hauptausdehnungsebene des Blatts ausgerichtet sind, wobei die erste Drehachse (6) durch den mindestens einen Rotationskörper (6) gebildet wird, und wobei der mindestens eine Rotationskörper (6) mindestens eine fingerartige Ausformung (10) umfasst, die beim Schließen der mindestens einen Betätigungseinrichtung (8) in Verbindung mit dem Einsetzen des Blatts (1) in den Griff (2) mit der mindestens einen Ausstanzung (3, 3a, 3b, 3c, 3d, 3e) in dem Blatt (1) zusammenwirkt und das Blatt (1) in Richtung des Griffs (2) nach innen zwischen zwei druckerzeugende Platten (5) zieht, die den Druck auf den Einsatz (14) allmählich erhöhen und dabei einen Teil des Blatts (1) zwischen der ersten und zweiten Anlagefläche der Befestigungseinrichtung einzieht, während andererseits die fingerähnliche Ausformung (10) beim Öffnen der mindestens einen Betätigungseinrichtung (8) in Verbindung mit dem Abmontieren des Blatts (1) an den /von dem Griff (2) mit der mindestens einen Ausstanzung (3, 3a, 3b, 3c, 3d, 3e) in dem Blatt (1) zusammenwirkt und das Blatt (1) in eine Richtung weg von dem Griff (2) nach außen zwischen die Platten (5) drückt, die allmählich den erzeugten Druck auf den Einsatz (14) verringern und dabei einen Teil des Blatts (1) aus der Position zwischen der ersten und zweiten Anlagefläche der Befestigungseinrichtung drückt.

2. Säge nach Anspruch 1, wobei das Blatt (1) mindestens eine seitliche Federzunge (4a, 4b, 4c) aufweist, die zum Federn in eine Richtung gebracht werden kann, die im Wesentlichen senkrecht zur Hauptausdehnungsebene des Blatts (1) ist.

3. Säge nach einem der vorhergehenden Ansprüche, wobei der Einsatz (14) der Befestigungseinrichtung allein mindestens eine erste Anlagefläche, die an einer ersten Seite des Blatts (1) anliegt, mindestens eine zweite Anlagefläche, die an einer zweiten Seite des Blatts (1) anliegt, und mindestens eine dritte Anlagefläche umfasst, die an mindestens einer Nut anliegt, die dafür in mindestens einem zusätzlichen Teil (5) der Befestigungseinrichtung oder in dem Griff (2) eingerichtet ist, wobei die erste und zweite Anlagefläche das Blatt (1) in dem Griff (2) halten und stabilisieren.

4. Säge nach Anspruch 3, wobei der Einsatz (14) der Befestigungseinrichtung in Bezug auf den Griff (2) beim Anmontieren und/oder Abmontieren des Blatts (1) an den /von dem Griff (2) bewegbar ist, um das Anmontieren und/oder Abmontieren zu erleichtern.

5. Säge nach einem der Ansprüche 2-4, wobei die Befestigungseinrichtung mindestens eine Feder aufweist, die beim Öffnen der mindestens einen Betätigungseinrichtung (8) in Verbindung mit dem Abmontieren des Blatts (1) von dem Griff (2) das Blatt (1) in eine Richtung weg von dem Griff (2) drückt.

6. Griff (2), der mindestens eine Befestigungseinrichtung mit mindestens einem ersten Teil in Form eines Rotationskörpers (6) ausweist, wobei der Rotationskörper (6) um eine erste Drehachse (6) gedreht werden kann, wobei der Griff mit einem Blatt (1) verbunden werden kann, das mindestens eine durchgehende Ausstanzung (3, 3a, 3b, 3c, 3d, 3e) aufweist, die sich von einer Kante des Blatts (1) erstreckt, und wobei der Rotationskörper (6) dazu bestimmt ist, mit der Ausstanzung (3, 3a, 3b, 3c, 3d, 3e) zusammenzuwirken, wobei der Rotationskörper (6) um mindestens ungefähr 90° um die erste Drehachse (6) gedreht werden kann, wobei ein zweiter Teil der Befestigungseinrichtung in Form eines Einsatzes (14) in Bezug auf den Griff (2) beim Anmontieren und/oder Abmontieren des Blatts (1) an den /von dem Griff (2) bewegbar ist, wobei der Einsatz (14) um und in Bezug auf die erste Drehachse (6) an einem ersten Ende des Einsatzes (14) bewegbar ist und um und in Bezug auf eine zweite Drehachse (7) an einem zweiten Ende des Einsatzes (14) bewegbar ist, **dadurch gekennzeichnet, dass** der mindestens eine Drehkörper (6) mit mindestens einer Betätigungseinrichtung (8) der Befestigungseinrichtung verbunden ist und durch diese betätigt wird, wobei der Einsatz der Befestigungseinrichtung mindestens eine erste Anlagefläche umfasst, die an einer ersten Seite des Blatts (1) anliegt, und ein dritter Teil der Befestigungseinrichtung in Form eines zweiten Einsatzes mindestens eine zweite Anlagefläche umfasst, die an einer zweiten Seite des Blatts (1) anliegt, wobei die erste und zweite Anlagefläche dazu bestimmt sind, das Blatt (1) in dem Griff (2) zu halten und zu stabilisieren, wobei der erste und zweite Einsatz in Bezug auf den Griff (2) beim Anmontieren und/oder Abmontieren des Blatts (1) an den /von dem Griff bewegbar sind, um das Anmontieren und/oder Abmontieren zu erleichtern, wobei der zweite und dritte Teil um und/oder in Bezug auf die erste Drehachse (6) in einem ersten Ende der jeweiligen Teile und um und/oder in Bezug auf eine zweite Drehachse (7) in einem zweiten Ende der jeweiligen Teile bewegbar sind, wobei die erste und zweite Drehachse im Wesentlichen senkrecht zu einer Hauptausdehnungsebene des Blatts ausgerichtet sind, wobei die erste Drehachse (6) durch den mindestens einen Rotationskörper (6) gebildet wird, und wobei der mindestens eine Rotationskörper (6) mindestens eine fingerartige Ausformung (10) umfasst, die beim Schließen der mindestens einen Betätigungseinrichtung (8) in Verbindung mit dem Einsetzen des Blatts (1) in den Griff (2) dazu bestimmt ist, mit der mindestens einen Ausstanzung (3, 3a, 3b, 3c, 3d, 3e) in dem Blatt (1) zusammenzuwirken und das Blatt (1) in Richtung des Griffs (2) nach innen zwischen zwei druckerzeugende Platten (5) zu ziehen, die den Druck auf den Einsatz (14) allmählich erhöhen und dabei einen Teil des Blatts (1) zwischen der ersten und zweiten Anlagefläche der Befestigungseinrichtung einzuziehen, während andererseits die fingerähnliche Ausformung (10) beim Öffnen der mindestens einen Betätigungseinrichtung (8) in Verbindung mit dem Abmontieren des Blatts (1) von dem Griff (2) dazu bestimmt ist, mit der mindestens einen Ausstanzung (3, 3a, 3b) in dem Blatt (1) zusammenzuwirken und das Blatt (1) in eine Richtung weg von dem Griff (2) nach außen zwischen die Platten (5) zu drücken, die allmählich den erzeugten Druck auf den Einsatz (14) verringern und dabei einen Teil des Blatts (1) aus der Position zwischen der ersten und zweiten Anlagefläche der Befestigungseinrichtung zu drücken.

7. Griff (2) nach Anspruch 6, wobei die Betätigungseinrichtung (8) die Form eines länglichen Arms (8) aufweist, der mit dem Rotationskörper (6) an einem Ende des länglichen Arms (8) verbunden ist.

8. Griff (2) nach einem der Ansprüche 6-7, wobei der Einsatz (14) der Befestigungseinrichtung allein mindestens eine erste Anlagefläche zur Anlage an einer ersten Seite des Blatts (1), mindestens eine zweite Anlagefläche zur Anlage an einer zweiten Seite des Blatts (1) und mindestens eine dritte Anlagefläche umfasst, die an mindestens einer Nut anliegt, die dafür in mindestens einem zusätzlichen Teil (5) der Befestigungseinrichtung oder in dem Griff (2) eingerichtet ist, wobei die erste und zweite Anlagefläche dazu bestimmt sind, das Blatt (1) in dem Griff (2) zu halten und zu stabilisieren.

9. Griff (2) nach Anspruch 8, wobei der Einsatz (14) in Bezug auf den Griff (2) beim Anmontieren und/oder Abmontieren des Blatts (1) an den/von dem Griff bewegbar ist, um das Anmontieren und/oder Abmontieren zu erleichtern.

10. Griff (2) nach einem der Ansprüche 6-9, wobei die Befestigungseinrichtung mindestens eine Feder aufweist, die beim Öffnen der mindestens einen Betätigungseinrichtung (8) in Verbindung mit dem Abmontieren des Blatts (1) von dem Griff (2) das Blatt (1) in eine Richtung weg von dem Griff (2) drückt.

11. Blatt (1), das mit einem Griff (2) verbindbar ist, wobei der Griff (2) mindestens eine Befestigungseinrichtung mit mindestens einem ersten Teil in Form eines Rotationskörpers (6) aufweist, wobei der Rotationskörper (6) um eine erste Drehachse (6) gedreht werden kann, wobei das Blatt (1) mindestens eine durchgehende Ausstanzung (3, 3a, 3b, 3c, 3d, 3e) aufweist, die sich von einer Kante des Blatts (1) erstreckt, und wobei die Ausstanzung (3, 3a, 3b, 3c, 3d, 3e) dazu bestimmt ist, mit dem Rotationskörper (6) zusammenzuwirken und dass die mindestens eine Ausstanzung (3, 3a, 3b, 3c, 3d, 3e) mindestens eine erste Ausnehmung (3cs, 3ds, 3es) aufweist, die im Wesentlichen parallele Seiten aufweist, und die dazu bestimmt ist, mit einer fingerähnlichen Ausformung (10) des Rotationskörpers (6) zusammenzuwirken, um das Blatt näher an den Griff zu ziehen, wenn das Blatt in dem Griff arretiert wird, und dass die mindestens eine Ausstanzung (3, 3a, 3b, 3c, 3d, 3e) mindestens eine zweite Ausnehmung aufweist, die im Wesentlichen parallele Seiten aufweist, und dass die mindestens eine Ausstanzung (3, 3a, 3b, 3c, 3d, 3e) mindestens eine dritte Ausnehmung aufweist, die im Wesentlichen parallele Seiten aufweist, **dadurch gekennzeichnet, dass** mindestens eine seitliche Federzunge (4a, 4b, 4c), die zum Federn in eine Richtung gebracht werden kann, die im Wesentlichen senkrecht zur Hauptausdehnungsebene des Blatts (1) ist, in der Kante des Blatts (1) bereitgestellt wird.

12. Blatt (1) nach Anspruch 11, wobei die seitliche Federzunge (4a, 4b, 4c) eine Hauptausdehnungsrichtung in einer Hauptausdehnungsebene des Blatts (1) aufweist, die sich von einer Hauptausdehnungsrichtung der ersten Ausnehmung um ungefähr 0-45°, bevorzugt um ungefähr 0-22,5° und am meisten bevorzugt um ungefähr 10° unterscheidet.

13. Blatt (1) nach einem der Ansprüche 11-12, wobei die mindestens eine Ausstanzung (3, 3a, 3b, 3c, 3d, 3e) in einer Hauptausdehnungsebene des Blatts (1) symmetrisch ist und an einem ersten Ende des Blatts (1) liegt, wobei das Blatt (1) auf zwei Arten eingesetzt werden kann und entsprechend im Griff (2) umdrehbar ist.

14. Blatt (1) nach Anspruch 13, wobei die mindestens eine Ausstanzung (3, 3a, 3b) in Bezug auf eine gerade Linie symmetrisch ist, die parallel zur Zahnkante des Blatts (1) ist, wobei das Blatt (1) einen ersten Winkel mit dem Griff (2) in der Hauptausdehnungsebene der Säge bildet, wenn das Blatt (1) auf eine erste Art in den Griff (2) eingesetzt ist, um im Wesentlichen nach unten zu sägen, und einen zweiten Winkel mit dem Griff (2) in der Hauptausdehnungsebene der Säge bildet, wenn das Blatt (1) auf eine zweite Art in den Griff (2) eingesetzt ist, um im Wesentlichen nach oben zu sägen, wobei der erste und zweite Winkel gleich groß sind.

15. Blatt (1) nach Anspruch 13, wobei die mindestens eine Ausstanzung (3, 3a, 3b, 3c, 3d, 3e) in Bezug auf eine gerade Linie symmetrisch ist, die zur Zahnkante des Blatts (1) nicht parallel ist, wobei das Blatt (1) einen ersten Winkel mit dem Griff (2) in der Hauptausdehnungsebene der Säge bildet, wenn das Blatt (1) auf eine erste Art in den Griff (2) eingesetzt ist, um im Wesentlichen nach unten zu sägen, und einen zweiten Winkel mit dem Griff (2) in der Hauptausdehnungsebene der Säge bildet, wenn das Blatt (1) auf eine zweite Art in den Griff (2) eingesetzt ist, um im Wesentlichen nach oben zu sägen, wobei der erste und zweite Winkel unterschiedlich groß sind.

16. Blatt (1) nach Anspruch 13, wobei die mindestens eine Ausstanzung (3, 3a, 3b, 3c, 3d, 3e) in einer Hauptausdehnungsebene des Blatts (1) unsymmetrisch ist und an einem ersten Ende des Blatts (1) liegt.

17. Blatt (1) nach einem der Ansprüche 11-12, wobei die erste Ausnehmung am nächsten an einer ersten langen Seite des Blatts angeordnet ist, wobei die zweite Ausnehmung am nächsten an einer zweiten langen Seite des Blatts angeordnet ist, und wobei die dritte Ausnehmung zwischen der ersten Ausnehmung und der zweiten Ausnehmung angeordnet ist.

18. Blatt (1) nach Anspruch 11, wobei die seitliche Federzunge (4a, 4b, 4c) zwischen der ersten Ausnehmung und der dritten Ausnehmung des Blatts (1) angeordnet ist.

## Revendications

1. Scie comprenant au moins une poignée (2) et au moins une lame (1), la poignée (2) ayant au moins un dispositif de fixation dont au moins une première partie est sous la forme d'un corps tournant (6), lequel corps tournant (6) peut tourner autour d'un premier axe de rotation (6), la lame (1) pouvant être détachée de la poignée (2) et ayant au moins une découpe (3, 3a, 3b, 3c, 3d, 3e) s'étendant à partir d'un bord de la lame (1), ledit premier axe de rotation (6) s'étendant à travers ladite au moins une découpe (3, 3a, 3b, 3c, 3d, 3e), une deuxième partie dudit dispositif de fixation sous la forme d'un insert (14) pouvant se déplacer par rapport à ladite poignée (2) lors du montage et/ou démontage de ladite lame (1) dans ladite poignée (2), ledit insert (14) pouvant se déplacer autour et par rapport audit premier axe de rotation (6) dans une première extrémité dudit insert (14) et autour et par rapport à un second axe de rotation (7) dans une seconde extrémité dudit insert (14), **caractérisée en ce que** ledit au moins un corps tournant (6) est raccordé à et actionné par au moins un dispositif actionneur (8) dudit dispositif de fixation, ledit insert (14) dudit dispositif de fixation comprenant au moins une première surface de contact qui vient en butée contre un premier côté de la lame (1), et une troisième partie dudit dispositif de fixation sous la forme d'un second insert comprenant au moins une seconde surface de contact qui vient en butée contre un second côté de la lame (1), lesdites première et seconde surfaces de contact retenant et stabilisant la lame (1) dans la poignée (2), lesdites deuxième et troisième parties dudit dispositif de fixation pouvant se déplacer par rapport à ladite poignée (2) lors du montage et/ou démontage de ladite lame (1) dans ladite poignée (2), dans le but de faciliter le montage et/ou le démontage, lesdites deuxième et troisième parties pouvant se déplacer autour et/ou par rapport audit premier axe de rotation (6) dans une première extrémité desdites parties, respectivement, et autour et/ou par rapport à un second axe de rotation (7) dans une seconde extrémité desdites parties, respectivement, lesdits premier et second axes de rotation étant orientés sensiblement perpendiculairement à un plan substantiel d'extension de ladite lame, ledit premier axe de rotation (6) étant constitué par ledit au moins un corps tournant (6) et ledit au moins un corps tournant (6) comprenant au moins une formation en forme de doigt (10) qui, suite à la fermeture dudit au moins un dispositif actionneur (8) en relation avec l'ajustement de ladite lame (1) dans ladite poignée (2), coopère avec ladite au moins une découpe (3, 3a, 3b, 3c, 3d, 3e) dans ladite lame (1) et tire ladite lame (1) en direction de ladite poignée (2) vers l'intérieur entre deux plaques génératrices de pression (5) en augmentant la pression successivement sur l'insert (14) et pour ce faire tire une partie de ladite lame (1) en place entre lesdites première et seconde surfaces de contact dudit dispositif de fixation, tandis que par ailleurs, ladite formation en forme de doigt (10), suite à l'ouverture dudit au moins un dispositif actionneur (8) en relation avec le démontage de ladite lame (1) dans ladite poignée (2), coopère avec ladite au moins une découpe (3, 3a, 3b, 3c, 3d, 3e) dans ladite lame (1) et appuie sur ladite lame (1) afin de l'éloigner de ladite poignée (2) vers l'extérieur entre les plaques (5) en diminuant successivement la pression générée sur l'insert (14) et pour ce faire appuie sur une partie de ladite lame (1) pour la faire sortir de la position entre lesdites première et seconde surfaces de contact dudit dispositif de fixation.

2. Scie selon la revendication 1, dans laquelle ladite lame (1) a au moins une languette à ressort latérale (4a, 4b, 4c) qui peut être amenée à se détendre dans une direction sensiblement perpendiculaire au plan substantiel d'extension de la lame (1).

3. Scie selon l'une quelconque des revendications précédentes, dans laquelle ledit insert (14) dudit dispositif de fixation à lui seul comprend au moins une première surface de contact qui vient en butée contre un premier côté de la lame (1), au moins une deuxième surface de contact qui vient en butée contre un second côté de la lame (1) et au moins une troisième surface de contact qui vient en butée contre au moins une rainure adaptée à cet usage dans au moins une partie supplémentaire (5) dudit dispositif de fixation ou dans la poignée (2), lesdites première et deuxième surfaces de contact retenant et stabilisant la lame (1) dans la poignée (2).

4. Scie selon la revendication 3, dans laquelle ledit insert (14) dudit dispositif de fixation peut se déplacer par rapport à ladite poignée (2) lors du montage et/ou démontage de ladite lame (1) dans ladite poignée (2) dans le but de faciliter le montage et/ou le démontage.

5. Scie selon l'une quelconque des revendications 2 à 4, dans laquelle ledit dispositif de fixation possède au moins un ressort, qui suite à l'ouverture dudit dispositif actionneur (8) en relation avec le démontage de ladite lame (1) dans ladite poignée (2), appuie sur ladite lame (1) afin de l'éloigner de ladite poignée (2).

6. Poignée (2) possédant au moins un dispositif de fixation dont au moins une première partie est sous la forme d'un corps tournant (6), lequel corps tournant (6) peut tourner autour d'un premier axe de rotation (6),ladite poignée pouvant être raccordée à une lame (1) ayant au moins une découpe (3, 3a, 3b, 3c, 3d, 3e) s'étendant à partir d'un bord de la lame (1) et ledit corps tournant (6) étant destiné à coopérer avec ladite découpe (3, 3a, 3b, 3c, 3d, 3e), ledit corps tournant (6) pouvant être tourné d'au moins environ 90° autour dudit premier axe de rotation (6), une deuxième partie dudit dispositif de fixation sous la forme d'un insert (14) pouvant se déplacer par rapport à ladite poignée (2) lors du montage et/ou démontage de ladite lame (1) dans ladite poignée (2), ledit insert (14) pouvant se déplacer autour et par rapport audit premier axe de rotation (6) dans une première extrémité dudit insert (14) et autour et par rapport à un second axe de rotation (7) dans une seconde extrémité dudit insert (14), **caractérisée en ce que** ledit au moins un corps tournant (6) est raccordé à et actionné par au moins un dispositif actionneur (8) dudit dispositif de fixation, ledit insert (14) dudit dispositif de fixation comprenant au moins une première surface de contact qui vient en butée contre un premier côté de la lame (1), et une troisième partie dudit dispositif de fixation sous la forme d'un second insert comprenant au moins une seconde surface de contact qui vient en butée contre un second côté de la lame (1), lesdites première et seconde surfaces de contact étant destinées à retenir et stabiliser la lame (1) dans la poignée (2), lesdits premier et second inserts pouvant se déplacer par rapport à la poignée (2) lors du montage et/ou démontage de la lame (1) dans la poignée dans le but de faciliter le montage et/ou le démontage, lesdites deuxième et troisième parties pouvant se déplacer autour et/ou par rapport audit premier axe de rotation (6) dans une première extrémité desdites parties, respectivement, et autour et/ou par rapport à un second axe de rotation (7) dans une seconde extrémité desdites parties, respectivement, lesdits premier et second axes de rotation étant orientés sensiblement perpendiculairement à un plan substantiel d'extension de ladite lame, ledit premier axe de rotation (6) étant constitué par ledit au moins un corps tournant (6) et ledit au moins un corps tournant (6) comprenant au moins une formation en forme de doigt (10), qui suite à la fermeture dudit au moins un dispositif actionneur (8) en relation avec l'ajustement de la lame (1) dans la poignée (2), est destinée à coopérer avec ladite au moins une découpe (3, 3a, 3b, 3c, 3d, 3e) dans ladite lame (1) et à tirer ladite lame (1) en direction de la poignée (2) vers l'intérieur entre deux plaques génératrices de pression (5) en augmentant la pression successivement sur l'insert (14) et pour ce faire, à tirer une partie de ladite lame (1) en place entre lesdites première et seconde surfaces de contact dudit dispositif de fixation, tandis que par ailleurs ladite formation en forme de doigt (10), suite à l'ouverture dudit au moins un dispositif actionneur (8) en relation avec le démontage de ladite lame (1) dans la poignée (2), est destinée à coopérer avec ladite au moins une découpe (3, 3a, 3b, 3c, 3d, 3e) dans ladite lame (1) et à appuyer sur ladite lame (1) afin de l'éloigner de la poignée (2) vers l'extérieur entre les plaques (5) en diminuant successivement la pression générée sur l'insert (14) et pour ce faire à appuyer sur une partie de ladite lame (1) pour la faire sortir de la position entre lesdites première et seconde surfaces de contact dudit dispositif de fixation.

7. Poignée (2) selon la revendication 6, dans laquelle ledit dispositif actionneur (8) se présente sous la forme d'un bras allongé (8) qui se raccorde au corps tournant (6) dans une extrémité du bras allongé (8).

8. Poignée selon l'une quelconque des revendications 6 et 7, dans laquelle ledit insert (14) dudit dispositif de fixation à lui seul comprend au moins une première surface de contact destinée à venir en butée contre un premier côté de la lame (1), au moins une deuxième surface de contact destinée à venir en butée contre un second côté de la lame (1) et au moins une troisième surface de contact qui vient en butée contre au moins une rainure adaptée à cet usage dans au moins une partie supplémentaire (5) dudit dispositif de fixation ou dans la poignée (2), lesdites première et deuxième surfaces de contact étant destinées à retenir et stabiliser la lame (1) dans la poignée (2).

9. Poignée (2) selon la revendication 8, dans laquelle ledit insert (14) peut se déplacer par rapport à la poignée (2) lors du montage et/ou démontage de la lame (1) dans la poignée dans le but de faciliter le montage et/ou le démontage.

10. Poignée (2) selon l'une quelconque des revendications 6 à 9, dans laquelle ledit dispositif de fixation présente au moins un ressort, qui suite à l'ouverture dudit au moins un dispositif actionneur (8) en relation avec le démontage de ladite lame (1) dans la poignée (2), appuie sur ladite lame (1) afin de l'éloigner de la poignée (2).

11. Lame (1) pouvant être raccordée à une poignée (2) ayant au moins un dispositif de fixation dont au moins une première partie est sous la forme d'un corps tournant (6), lequel corps tournant (6) peut tourner autour d'un premier axe de rotation (6), la lame (1) ayant au moins une découpe (3, 3a, 3b, 3c, 3d, 3e) s'étendant à partir d'un bord de la lame (1) et ladite découpe (3, 3a, 3b, 3c, 3d, 3e) étant destinée à coopérer avec ledit corps tournant (6) et ladite au moins une découpe (3, 3a, 3b, 3c, 3d, 3e) ayant au moins un premier évidement (3cs, 3ds, 3es) ayant des côtés sensiblement parallèles et étant destiné à coopérer avec une formation en forme de doigt (10) dudit corps tournant (6) pour tirer la lame plus près de la poignée lorsque la lame est verrouillée dans la poignée et ladite au moins une découpe (3, 3a, 3b, 3c, 3d, 3e) ayant au moins un deuxième évidement ayant des côtés sensiblement parallèles et ladite au moins une découpe (3, 3a, 3b, 3c, 3d, 3e) ayant au moins un troisième évidement ayant des côtés sensiblement parallèles, **caractérisée en ce que** au moins une languette à ressort latérale (4a, 4b, 4c) qui peut être amenée à se détendre dans une direction sensiblement perpendiculaire au plan substantiel d'extension de la lame (1) est prévue sur ledit bord de la lame (1).

12. Lame (1) selon la revendication 11, dans laquelle ladite languette à ressort latérale (4a, 4b, 4c) a une direction substantielle d'extension, dans un plan substantiel d'extension de la lame (1), qui diffère d'une direction substantielle d'extension dudit premier évidement d'environ 0 à 45°, de préférence d'environ 0 à 22,5° et idéalement d'environ 10°.

13. Lame (1) selon l'une quelconque des revendications 11 et 12, dans laquelle ladite découpe (3, 3a, 3b, 3c, 3d, 3e) est symétrique dans un plan substantiel d'extension de la lame (1) et située dans une première extrémité de la lame (1), la lame (1) pouvant être ajustée de deux manières et par conséquent étant réversible dans la poignée (2).

14. Lame (1) selon la revendication 13, dans laquelle ladite découpe (3, 3a, 3b, 3c, 3d, 3e) est symétrique par rapport à une ligne droite parallèle au bord denté de la lame (1), la lame (1) formant un premier angle avec la poignée (2) dans le plan substantiel d'extension de la scie lorsque la lame (1) est ajustée d'une première manière dans la poignée (2) afin de scier sensiblement vers le bas et un second angle avec la poignée (2) dans le plan substantiel d'extension de la scie lorsque la lame (1) est ajustée d'une seconde manière dans la poignée (2) afin de scier sensiblement vers le haut, lesdits premier et second angles étant de même grandeur.

15. Lame (1) selon la revendication 13, dans laquelle ladite au moins une découpe (3, 3a, 3b, 3c, 3d, 3e) est symétrique par rapport à une ligne droite non parallèle au bord denté de la lame (1), la lame (1) formant un premier angle avec la poignée (2) dans le plan substantiel d'extension de la scie lorsque la lame (1) est ajustée d'une première manière dans la poignée (2) afin de scier sensiblement vers le bas et un second angle avec la poignée (2) dans le plan substantiel d'extension de la scie lorsque la lame (1) est ajustée d'une seconde manière dans la poignée (2) afin de scier sensiblement vers le haut, lesdits premier et second angles étant de grandeurs différentes.

16. Lame (1) selon la revendication 13, dans laquelle ladite au moins une découpe (3, 3a, 3b, 3c, 3d, 3e) n'est pas symétrique dans un plan substantiel d'extension de la lame (1) et est située dans une première extrémité de la lame (1).

17. Lame (1) selon l'une quelconque des revendications 11 et 12, dans laquelle ledit premier évidement est positionné le plus près d'un premier côté long de la lame, ledit deuxième évidement est positionné le plus près d'un second côté long de la lame et ledit troisième évidement est positionné entre ledit premier évidement et ledit deuxième évidement.

18. Lame (1) selon la revendication 11, dans laquelle ladite languette à ressort latérale (4a, 4b, 4c) est située entre ledit premier évidement et ledit troisième évidement de la lame (1).
